# EUROPEAN PATENT APPLICATION

(11) **EP 4 177 237 A1**
(43) Date of publication of application: **10.05.2023**
(21) Application number: 21206746.6
(22) Date of filing: 05.11.2021
(51) Int. Cl.: C05F 5/00, C05F 9/04, C05F 11/08, C05F 17/05, C05F 17/20, C05F 17/50

(54) **METHOD FOR PROCESSING ORGANIC WASTE**

(71) Applicant: Mars, Incorporated, McLean, VA 22101 (US)
(72) Inventor: FEUGIER, Alexandre, 30470 AIMARGUES (FR)
(74) Representative: Cabinet Nony

(57) **Abstract**

The present disclosure relates to a method for processing an organic waste material into an organic compost comprising:
a) fermenting the organic waste material comprising adding at least one or more lactic bacteria to the organic waste material wherein the step is performed under facultative anaerobic conditions and at an acidic pH, whereby a fermented organic material is obtained,
b) maturing the fermented organic material obtained at step a) in aerobic conditions, whereby a maturation organic material is obtained, and
c) vermicomposting the maturation organic material obtained at step b), whereby an organic compost is obtained.

## Description

### FIELD OF THE DISCLOSURE

The present disclosure relates to the field of processing organic waste for obtaining a processed organic product for, notably, improving soil plant growth properties.

### BACKGROUND OF THE DISCLOSURE

A plurality of methods is known in the art to transform organic waste into useful products, especially to form soil amending products such as products improving soil plant growth properties.

Among these methods, anaerobic digestion is a sustainable option in the treatment of organic waste since it takes advantage of biomass as a renewable energy source. From the anaerobic digestion process, mainly two products are obtained: biogas, which may be used as fuel, and a stabilized liquid-solid residual matter which may be called "digestate", which may be used as a soil conditioner and/or biofertilizer for crops. The digestate has been described in the art as containing a high concentration of organic matter and various plant nutrients, being ideal for use as a fertilizer in agriculture (Guilayn et al., 2019, Waste Management, Vol. 86 : 67-79).

However, in various circumstances, digestate may cause adverse effects such as eutrophication of water bodies, groundwater contamination and air pollution due to the release of ammoniacal nitrogen. Drawbacks of digestate include (a) the presence of biodegradable matter which is not completely stabilized, (b) a high concentration of ammoniac which may contribute to air pollution and may lead to phytotoxic effects, (c) the presence of pathogenic microorganisms in the digestate that can survive up to a year, especially in mesophilic digestion systems and (d) storage and transport difficulties due to the high-water content of the digestate.

It is common to separate the digestate into two phases for further processing, a liquid fraction and a solid fraction, respectively. The solid fraction is mostly used as an organic fertilizer. Still, the solid fraction of digestates has been traditionally refined through biological processes such as composting.

Among various processes of refining anaerobic digestates of organic wastes, treatment of the digestate by vermicomposting has been described in the art (Krishnasamy et al., 2014, Int. Environment and Waste Management, Vol. 14 : 149-164). Before vermicomposting, the anaerobic digestate may be subject to dewatering and stabilized by addition of a bulking material such as sawdust. According to Krishnasamy et al. (2014, *Supra),* preparing a mixture of 70:30 (digestate:sawdust) has been found to be the suitable medium for vermicomposting based on worm growth.

There remains a need in the art for improved methods for processing organic wastes, which include for improved methods for obtaining processed organic wastes suitable for amending soils, such as for improving plant growth.

### SUMMARY OF THE DISCLOSURE

The present disclosure relates to a method for processing an organic waste material into an organic compost comprising:
a) fermenting the organic waste material comprising adding at least one or more lactic bacteria to the organic waste material wherein the step is performed under facultative anaerobic conditions and at an acidic pH, whereby a fermented organic material is obtained,
b) maturing the fermented organic material obtained at step a) in aerobic conditions, whereby a maturation organic material is obtained, and
c) vermicomposting the maturation organic material obtained at step b), whereby an organic compost is obtained.

In some embodiments, step a) comprises adding a microorganism composition comprising lactic bacteria to the organic waste material.

In some embodiments, the microorganism composition used at step a) comprises, further to the lactic bacteria, one or more microorganisms selected from *Lactobacillus, Propionibacterium, Pediococcus, Streptococcus* or a combination thereof

In some embodiments, step a) is performed at a pH from about 3 to about 5.

In some embodiments, the moisture content of the fermented organic material that is processed at step b) is from about 45% to about 75%.

In some embodiments, step b) is performed at a pH from about 4 to about 7.

In some embodiments, step c) comprises adding earthworms of one or more earthworm species to the maturation organic material obtained at step b).

In some embodiments, step c) further comprises adding, in addition to earthworms, cellulosic waste and/or water to the maturation organic material.

In some embodiments, step c) is performed at a T°C from about 15°C to about 30°C.

In some embodiments, step c) is performed at a moisture content of the processed organic material from about 60% to about 70%.

The present disclosure further pertains to a processed organic compost obtainable by the method according to the method disclosed herein.

It also concerns the use of the processed organic compost obtained by the method disclosed herein, or of the organic compost disclosed herein, for soil fertilization.

This disclosure further relates to a method for soil fertilization, comprising:
i) processing an organic waste material according to the method of any one of claims 1 to 10 whereby an organic compost is obtained; and
ii) adding said organic compost obtained at step i) to the soil to be fertilized.

### DETAILED DESCRIPTION

It has been found that processing organic waste material can be improved by performing a method including, notably, a fermentation step in specific facultative anaerobic conditions which can avoid methane production.

It has been found that processing an organic waste material can be improved by performing the combination of a fermentation step in specific facultative anaerobic conditions of a starting organic waste material to be treated so as to obtain a resulting fermented organic waste material that is further processed by a step of fermentation in aerobic conditions so as to obtain a maturation organic material that is immediately appropriate for being transformed by vermicomposting.

The present disclosure relates to method for processing an organic waste material into an organic compost including at least a step of fermentation, a step of maturation and a step of vermicomposting, wherein :
a) the step of fermentation includes at least adding one or more lactic bacteria to the organic waste material wherein the said step is performed under facultative anaerobic conditions and at an acidic pH, whereby a fermented organic material is obtained,
b) the step of maturation includes fermenting the fermented organic material obtained at step a) in aerobic conditions, whereby a maturation organic material is obtained, and
c) the step of vermicomposting includes at least subjecting the maturation organic material obtained at step b) to a step of vermicomposting, whereby an organic compost is obtained.

In some embodiments, the present disclosure relates to a method for processing an organic waste material into an organic compost including:
a) fermenting the organic waste material comprising adding at least one or more lactic bacteria to the organic waste material wherein the step is performed under facultative anaerobic conditions and at an acidic pH, whereby a fermented organic material is obtained,
b) maturing the fermented organic material obtained at step a) in aerobic conditions, whereby a maturation organic material is obtained, and
c) vermicomposting the maturation organic material obtained at step b), whereby an organic compost is obtained.

### Definitions

In the claims below and in the description herein, any one of the terms "including", "includes" "comprising", "comprised of' or "which comprises" is an open term that means including at least the elements/features that follow, but not excluding others. Thus, the term comprising, when used in the claims, should not be interpreted as being limitative to the means or elements or steps listed thereafter. For example, the scope of the expression a method comprising step A and step B should not be limited to methods consisting only of methods A and B. Any one of the terms "including" or "which includes" or "that includes" as used herein is also an open term that also means including at least the elements/features that follow the term, but not excluding others. Thus, "including" is synonymous with and means "comprising".

The terms "consists of' excludes any element, step or ingredient not specified in the claim. The transitional phrase "consisting essentially of' does not substantially affect the scope of the claims on the specified substance or step, and the basic and novel characteristic (s) of the claimed disclosure. The term "consisting essentially" claims occupy a central area between the closed claims written in the "consisting" form and the fully open claims drafted in the "including" form.

As used herein, the terms "waste material" and "organic waste material" are used interchangeably and refer to any type of discarded organic material derived from human, animal or industrial areas. Organic wastes can encompass wastes selected from municipal sewage, household waste, slaughterhouse waste, human waste, plant waste such as without limitation from gardening, animal waste and industrial waste such as without limitation waste from the food, feed and pharmaceutical industry, e.g. waste from fermentation processes, brewing or production of recombinant enzymes. The waste may be provided from waste holding facilities, *i.e.,* facilities for holding, storage or treatment of waste, including pits or lagoon where animal waste is stored.

As used herein the term "energy density" means the amount of energy by weight of an organic material. Typically, an energy density can be expressed as kilojoules per kilogram of dry matter.

As used herein, an acidic pH means a pH of less than 7.0, preferably a pH of 5.0 or less. As used herein, a basic pH means a pH of more than 7.0, preferably a pH of 8.0 or more.

### Provision of an organic waste material

Any kind of organic waste material can be provided for performing the disclosed method.

Preferably, the organic waste material provided for performing the disclosed method can be a "fresh" organic waste material, *i.e.* an organic waste material for which decomposition has not detectably started.

Thus, preferably, the organic waste material that can be used as the starting material to be treated by the method disclosed herein may not have been previously subjected to any fermentation step in the presence of exogenous microorganisms. This does not mean that the starting organic waste material does not itself naturally contain any microorganism. Illustratively, animal manure that can enter in the composition of the starting organic waste material naturally includes enterobacteria, such as without limitation *E; coli* and/or *Lactobacillus.*

However, although this not a preferred embodiment, the starting organic waste material can have already started, at least partly, decomposition.

Because a variety of kinds of organic waste materials can be processed according to the method disclosed herein, the said starting organic waste material can include various amounts of carbon, hydrogen, oxygen and nitrogen, and notably can have various C:N ratios (carbon amount to nitrogen amount ratios)

Illustratively, as it is known in the art, an organic waste material mainly including fresh weeds is endowed with a substantially higher value of C:N ratio as compared with an organic waste material mainly including fish scraps. Further illustratively, an organic waste material mainly including pig or chicken manure is endowed with a substantially lower value of C:N ratio as compared with sawdust or wood chips and twigs.

In some embodiments, the starting organic waste material can include a plurality of kinds of organic waste, such as without limitation household waste, industrial organic waste, agricultural organic waste, etc.

In some embodiments, the starting organic waste material can be a mixture of a plurality of waste materials.

In embodiments wherein the starting organic waste material is a mixture of a plurality of waste materials, the composition of the mixture can be preferably adapted so as to avoid an excessive temperature increase during the fermentation steps of the disclosed method. Avoiding an excessive temperature increase during the fermentation steps of the disclosed method can be reached by preparing a mixture of waste materials having an appropriate mean energy density, such as an energy density of less than about 1000 kJ per 100 g wet matter of starting organic waste material.

The skilled artisan knows by advance the approximative energy density of almost all organic matters, thus including the approximative energy density of the various materials that may be comprised in the starting organic waste material that is used for performing the disclosed method. Illustrative examples are provided in Table 1, hereinunder. Detailed information regarding the energy density values of hundreds of organic materials that can enter in the composition of the starting organic waste material used for performing the disclosed method is readily available to the skilled artisan. Illustratively, a detailed information is disclosed notably at the Website titled "Informations Nutritionnelles.fr" (at the following internet address: "https:\\informationsnutritionnelles.fr/energie-kilojoules" _ the content being incorporated herein by reference).

**Table 1: Energy density of several organic materials**

| **Organic material** | **Mean energy density, in Kilojoules per 100g wet matter** |
|---|---|
| Vegetable oils (walnut, peanut, sunflower, olive, colza, grape seed) | 3 700 ― 3 800 |
| Cow butter | 3 000 - 3100 |
| Walnut, hazelnut, cashnew | 2 800 - 2 900 |
| Almonds, pistache, arachide, peanut | 2 600 - 2 700 |
| Black chocolate, milk chocolate | 2 200 - 2 500 |
| Biscuits | 2 000 - 2 500 |
| Sausage | 1 800 ― 2 100 |
| Dried fruits | 1 900 - 2 000 |
| MARS^{®} bar | 1 900 |
| Bonbons, sweets | 1 700 |
| Emmental cheese | 1 500 - 1 700 |
| Toast bread, rusk | 1 600 |
| Pastas, rice | 1 400 - 1 600 |
| Bread | 1 000 - 1 200 |
| Fresh cow milk cream | 1 200 |
| Fruit j am | 800 - 1 000 |
| Meat (Veal, beef) | 1 000 |
| Mustard | 500 - 600 |
| Prok ham | 500 - 700 |
| Hen eggs | 500 - 600 |
| Chickpea | 500 - 600 |
| Fresh cheese, yoghourt | 400 - 600 |
| Tuna fish | 400 - 500 |
| Meat (poultry such as chicken, turkey) | 400 - 500 |
| Green peas | 300 ― 400 |
| White grape | 200 - 300 |
| Milk (cow, goat, ewe) | 200 - 300 |
| Fruits (blackberry, apricot | 200 - 300 |
| Defatted milk | 100 ― 200 |
| Green bean | 100 ― 150 |
| Vegetables (asparagus, mushrooms, radish, endive, salad) | 30 ― 100 |
| Fodder | 10-20 |
| Cardboard | 1 - 2 |
| Saw dust | 1 - 2 |
| Paper | 1 - 2 |
| Water | 0 |

In some embodiments, the starting organic waste material can be prepared so as to include a mixture of various waste materials having distinct energy density values so as to obtain an organic waste material to be used in the disclosed method; wherein the said organic waste material has an appropriate mean energy density.

Typically, the starting organic waste material can include waste materials having a high energy density value(s) *(e.g.* vegetable oil, chocolate, etc.) and waste material having a low energy density value(s) (e.g. vegetables, fodder, saw dust, carboard).

In some embodiments, the starting organic waste material can be prepared by mixing the various kinds of waste materials contained therein, so as to obtain the said material having an appropriate mean energy density within the whole mass or volume thereof.

In some embodiments, the appropriate mean energy density of the starting organic waste material can be obtained through a multi-layer structure. In an exemplary multi-layer structure, the starting organic waste material can be prepared by (i) forming a first layer of organic waste material having a first mean energy density value *(e.g.* of high energy density value), (ii) forming a second layer of waste material having a second energy density value (e.g. a low density value), etc.), and reiterating alternatively forming high and low energy density layers until completion of providing a starting organic waste material to be processed by the disclosed method.

Illustratively, a starting organic waste material intended to be treated according to the disclosed method can comprise a mixture of (i) a waste material of a high energy density value such as a sugar-containing material as for example cacao pulp and (ii) a waste material of a low energy density value such as a fiber-containing material as for example cat litter. Illustratively, a balanced composition of such a starting organic waste material can comprise, for example, about 40 kg of cacao pulp and 30 kg of cat litter.

Typically, the presence of fiber material, such as plant waste, in the starting organic waste material will favorize the growth of fungi, at steps of the disclosed method.

In some embodiments, the starting organic waste material can contain a mixture of solid waste material(s) and liquid waste material(s).

In some embodiments, the organic waste material can be provided, for the sake of performing the disclosed method after being cut in pieces of about 1 to 10 cm in length, so as to optimize the conditions of the disclosed method, such as (i) shortening the duration of one or more of the steps of incubation, of fermentation, of maturation and of vermicomposting of the method and/or (ii) obtaining a more complete processing of the material at the end of one or more of the said steps of the method.

### Step a) of the method

At step a), the organic waste material to be treated is subjected to a fermentation step in facultative anaerobic conditions and at an acidic pH.

For starting fermentation at step a), the starting organic waste material can be seeded with a microorganism composition including lactic bacteria.

In some embodiments, the property of the various waste materials contained in the organic waste material to be treated by the disclosed method may substantially differ. In these embodiments, it can be preferable to seed separately one or more of the distinct constitutive waste organic materials intended to be incorporated in the organic waste material that is treated at step a) of the said method.

As used herein, for performing the disclosed method, the distinct waste materials which can be used in the constitution of the starting organic waste material can be separately seeded with a microorganism composition including lactic bacteria and then the distinct microorganism-seeded waste materials are gathered so as to obtain the microorganism-seeded organic waste material that is used at the beginning of step a) of the disclosed method. Otherwise said, in embodiments wherein distinct organic waste materials entering in the composition of the starting organic waste material are separately seeded with the said microorganism composition, a multi-layer structure of the said starting organic waste material is formed subsequently to the seeding of these distinct material with the said microorganism composition.

Illustratively, in a starting organic waste material having a multi-layered structure as disclosed previously, each of the waste materials forming one of the layers can be seeded with a microorganism composition including lactic bacteria, which results in a starting organic waste material including the said microorganism composition with lactic bacteria dispersed within the whole volume of the said starting organic waste material.

Further illustratively, seeding pet food kibbles (as organic waste material) with the microorganism composition including lactic bacteria typically requires soaking the said kibbles in the said microorganism composition including lactic bacteria for a time period sufficient for the microorganisms to colonize the whole volume of the pet food kibble.

### Microorganism composition for seeding the starting organic waste material

At step a) lactic acid bacteria that are added to the organic waste material can be selected from *Lactobacillus, Propionibacterium, Pediococcus, Streptococcus* or a combination thereof.

In some embodiments, *Lactobacillus* bacteria can be selected from *Lactobacillus bulgaricus* and *Lactobacillus casei.*

In some embodiments, *Propionibacterium* bacteria can consist of *Propionibacterium freudenreichi.*

In some embodiments, *Pediococcus* bacteria can consist of *Pediococcus halophilus.*

In some embodiments, *Streptococcus* bacteria can consist of *Streptococcus lactis* or *Streptococcus faecalis.*

In some embodiments, in addition to lactic acid bacteria, one or more further microorganism selected from actinomycetes, phototropic bacteria (which may also be termed "photosynthetic bacteria"), mold, fungi and/or yeasts can be added to the organic waste material at the beginning of step a).

In some embodiments, the one or more actinomycetes can be selected from *Streptomyces, Streptoverticilium, Nocardia, Micromonospora* and *Rhodococcus.*

In some embodiments, *Streptomyces* actinomycetes can be selected from *Streptomyces albus* and *Streptomyces griseus.*

In some embodiments, *Streptoverticilium* actinomycetes can consist of *Streptoverticilium baldacii.*

In some embodiments, *Nocardia* actinomycetes can consist of *Nocardia asteroids.*

In some embodiments, *Micromonospora* actinomycetes can consist of *Micromonospora chalcea.*

In some embodiments, *Rhodococcus* actinomycetes can consist of *Rhodospirilum rubrum* In some embodiments, the one or more mold fungi can be selected from *Aspergillus* and *Mucor.*

In some embodiments, *Aspergillus* mold fungi can consist of *Aspergillus japonicus* or *aspergillus oryzae,* and *Mucor hiemalis.*

In some embodiments, *Mucor* fungi can consist of *Mucor hiemalis.*

In some embodiments, the one or more yeasts can be selected from *Saccharomyces* and *Candida.*

In some embodiments, *Saccharomyces* yeasts can consist of *Saccharomyces cerevisiae* or *Saccharomyces lactis.*

In some embodiments, *Candida* yeasts can consist of *Candida utilis.*

In some embodiments, only lactic bacteria are included in the microorganism composition that is added at step a).

In some other embodiments, the lactic bacteria are combined with one or more of either actinomycetes, phototropic bacteria, mold fungi and yeasts.

Exemplary various embodiments of microorganisms that can be combined to the lactic acid bacteria, in the microorganism composition that is added at step a) of the disclosed method, are described in Table 2 below.

**Table 2 illustrative: combined added microorganisms at step a)**

| **Ref^{a}** | **Actino^{b}** | **Photo bact^{c}** | **Mold fungi** | **yeasts** |
|---|---|---|---|---|
| 1 | + | | | |
| 2 | | + | | |
| 3 | | | + | |
| 4 | | | | + |
| 5 | + | + | | |
| 6 | + | | + | |
| 7 | + | | | + |
| 8 | | + | + | |
| 9 | | + | | + |
| 10 | | | + | + |
| 11 | + | + | + | |
| 12 | + | + | | + |
| 13 | + | | + | + |
| 14 | | + | + | + |
| 15 | + | + | + | + |

In Table 2 : (i) Ref^{a} : combination reference number; (ii) Actino^{b}: actinomycetes; (iii) Photo Bact^{c} : phototrophic bacteria.

Each of the microorganisms that can be combined to lactic acid bacteria for adding to the organic waste material is publicly available, including through microorganism culture collections such as ATCC (American Type Culture Collection).

Various combined microorganisms' cocktails are also commercially available and can be used at step a) of the present method.

In some embodiments, microorganisms added at step a) can consist of combined microorganisms called "Effective Microorganisms" (also termed "EM") such as disclosed, for example, by Yamada et al. (2001, Journal of crop production, Vol. 3 : 255-268) or by Szymenski et al. (2003, Lanfax Laboratories, Armidale, NSW, Australia, R.A. and Jones, M.J. (Eds).(ISBN 0-9579438-1-4, the content being incorporated herein by reference)

In some embodiments, the combined microorganism added at step a) are in a culture mix product, where the microorganisms are optionally on a support, the said culture mix product including wheat bran and optionally molasses.

An illustrative embodiment of a lactic bacteria-containing microorganism composition that is added to the organic waste material, at the beginning of step a) can comprise, per milliliter of the said composition, (i) 10⁴ CFUs (for "Colony Forming Units") of lactic bacteria, (ii) 10³CFUs of photosynthetic bacteria and (iii) 10³ CFUs of yeasts.

An embodiment of the lactic bacteria-containing microorganism composition that can be added to the waste organic material for performing step a) is the composition commercialized under the name "EM-1^{™}" by TeraGanix Company.

### Preparing a microorganism composition comprising lactic bacteria

As previously stated herein, some embodiments of step a) include adding a microorganism composition comprising lactic bacteria that can be commercially available.

In some embodiments of step a), the microorganism composition comprising lactic bacteria can be specifically prepared before adding it to the organic waste material.

A microorganism composition comprising lactic bacteria, can be prepared by preculturing the lactic bacteria, and optionally the further one or more further microorganism selected from actinomycetes, phototropic bacteria, mold, fungi and/or yeasts, in an appropriate culture medium, so as to provide a stock microorganism composition that may be repeatedly used as a starting microorganism composition comprising lactic bacteria, at step a) of the disclosed method.

The stock microorganism composition comprising lactic bacteria can be prepared by adding the appropriate amount of lactic bacteria, microorganism composition comprising lactic bacteria, to an appropriate culture medium.

Then, for performing step a), an appropriate portion (e.g. volume) of the said stock solution is collected so as to provide a microorganism composition comprising lactic bacteria that is added to the organic waste material to be treated.

In some embodiments, the said stock solution, and thus also the microorganism composition comprising lactic bacteria that is collected therefrom, can comprise, per milliliter of the said composition, about 10⁴ CFUs (for "Colony Forming Units") of lactic bacteria In some embodiments wherein the said stock solution further comprises photosynthetic bacteria, the said stock solution can comprise about 10³CFUs of photosynthetic bacteria.

In some embodiments wherein the said stock solution further comprises yeasts, the said stock solution can comprise about 10³ CFUs of yeasts.

In some embodiments, the appropriate culture medium for preculturing the lactic bacteria, and optionally the further one or more further microorganism selected from actinomycetes, phototropic bacteria, mold, fungi and/or yeasts, includes mainly water to which are added organic molasses and fibers, e.g. wheat bran. Illustratively, in such an embodiment, the culture medium can include a mixture of about 20 L of water (e.g. at room temperature), about 250 mL of organic molasses and about 20 kg of wheat bran.

The lactic bacteria, and optionally the further one or more further microorganism selected from actinomycetes, phototropic bacteria, mold, fungi and/or yeasts, are added to the preculture medium.

In some embodiments, the preculture medium that has been seeded with the lactic bacteria, and optionally the further one or more further microorganism selected from actinomycetes, phototropic bacteria, mold, fungi and/or yeasts, is incubated at about 25°C, preferably in facultative naerobic conditions, for example during a time period of two weeks, so as to allow the growth of the lactic bacteria, and optionally the further one or more further microorganism selected from actinomycetes, phototropic bacteria, mold, fungi and/or yeasts.

At the end of the preculture medium incubation period, the stock microorganism composition comprising lactic bacteria is provided, where portions thereof can be used as the microorganism composition comprising lactic bacteria that is added to the organic waste material, at step a) of the disclosed method.

According to these embodiments, a microorganism composition comprising lactic bacteria that can be used at step a) of the disclosed method is continuously available.

### Embodiments of step α)

At step a), depending notably on the mean qualitative and quantitative constitution in materials of the organic waste material to be treated, the lactic bacteria-containing microorganism composition can be added at a mean amount ranging from about 10² to about 10⁶, preferentially from about 10³ to about 10⁵ CFUs of lactic bacteria per kg of organic waste material to be treated.

At step a), the microorganism composition can be added according to any method which is well known by the skilled person. Typically, the microorganisms, optionally supported on a specific carrier, can simply be dispersed at the top of the fermentable organic waste material to be processed, or alternatively separately at the top of each of the waste materials to be included in the starting organic waste material to be treated, or further alternatively, especially when the microorganism composition is in a liquid form, the organic waste material can be soaked within the said composition.

In some embodiments, the lactic bacteria-containing microorganism composition used at step a) can be a liquid composition.

Facultative anaerobic conditions applied at step a) means that the total absence of oxygen is avoided. Otherwise said, step a) is not performed in strict anaerobic conditions.

Typically, in strict anaerobic conditions, the microorganisms grow in an organic material with an oxygen content of about 1% to about 2%. Applying strict anaerobic conditions results in the growth of mainly anaerobic microorganisms, including those that may be initially present in the organic waste material before seeding of the lactic bacteria-containing microorganism composition, such as for example commensal bacteria, e.g. enterobacteria, in embodiments wherein the organic waste material comprises animal manure. Typically, treating the said organic waste material in strict anaerobic conditions, and thus favorizing the growth of anaerobic microorganisms, would lead to the production of alcohol (notably as a result of sugar-containing material fermentation) and ammoniac (notably as a result of protein-containing material fermentation). Typically, applying strict anaerobic conditions, notably because it results in a substantial ammoniac production, induces a highly basic pH in the waste organic material being treated, such as, commonly, a basic pH ranging from 8 to 9. A basic pH results in the killing of most of the microorganisms, including the fungi and the yeasts that, when present, are very useful according to the disclosed method, and especially at the next step b) of the disclosed method. Further, as it is known in the art, applying strict anaerobic conditions would allow the growth of pathogenic bacteria, including, in some embodiments, pathogenic bacteria that may be contained in animal manure. Still further, fermenting the staring organic waste material in strict anaerobic conditions would lead to a high temperature increase, typically up to 70°C, which would result in the killing of various useful microorganisms, including fungi and yeasts.

As it is known in the art, strict anaerobic digestion of organic waste material uses a consortium of natural bacteria to degrade and then convert an organic substrate into a mixture of methane and carbon dioxide. Typically, the step of strict anaerobic digestion of organic waste known in the art is performed either (i) in uncontrolled pH conditions or (ii) in basic pH conditions, which pH conditions favorize production of methane.

However, it is believed according to the present disclosure that methane production, although it may provide a useful energy source, is a source of atmospheric pollution. Further, the resulting fermented organic matter is not appropriate for being subsequently used as a fertilizer, notably because it contains ammoniac which is detrimental to further immediate processing of the resulting fermented material through further steps of transformation by microorganisms.

In contrast, the acidic pH conditions of step a) can allow avoiding production of methane.

In contrast, at step a) of the disclosed method, the facultative anaerobic conditions of fermentation can allow (i) avoiding an excessive production of alcohol and ammoniac and (ii) favorizing, notably, the production of lactic acid (notably as a result of sugar-containing material fermentation).

In some embodiments of step a) wherein fermentation liquid is produced, the said fermentation liquid can be preferably removed, either at time periods or continuously, so as to avoid oxygen deprivation that would result in strict anaerobic conditions.

At step a) production of acetic acid can allow performing step a) in acidic conditions.

In some embodiments, step a) can be performed at a pH ranging from about 3.0 to about 5.0, such as at a pH ranging from about 3.5 to about 4.0.

The pH can be measured according to any method known in the art, such as with a pH probe known *per se.*

At step a), facultative anaerobic conditions can be easily obtained through techniques well known in the art, such as without limitation by providing initially an "aerated" organic waste material. An aerated organic waste material can be obtained by simply stirring the organic waste material to be treated at the beginning of step a), and optionally also by stirring the fermenting organic waste material one or more times during step a).

Typically, by performing step a) in facultative anaerobic conditions, microorganisms can grow in a fermenting organic waste material having an oxygen content ranging from about 5% to about 20%.

As used throughout the present description, the oxygen content of an organic material, and especially the oxygen content of an organic waste material that is processed at step a), can, when necessary, be measured according to any method known in the art, such as by using an oxygen probe.

Acidification of the organic waste material is in general not required because an acidic pH can be obtained through the production of acetic acid during step a).

In some embodiments, acidic pH can be obtained, at least partly, by adding one or more organic acids to the said waste material.

In some embodiments, the said one or more organic acids can be a straight or branches chain, saturated or unsaturated carboxylic acid having 2 to 6 carbon atoms. In some embodiments, the said one or more organic acid can be selected from acetic acid, lactic acid, citric acid, malic acid, ascorbic acid and gluconic acid. Lactic acid is the most preferred organic acid.

Step a), because it is performed in facultative anaerobic conditions, does not cause a high temperature increase.

Typically, step a) can be performed at a temperature that does not substantially affect viability of the microorganisms that have been added and have colonized the waste organic material under processing.

Step a) can be preferably performed at a temperature lower than about 50°C, and can be preferably performed at a temperature ranging from about 10°C to about 45°C.

In practice, the anaerobic fermenting process proceeds over a wide range of temperatures and, in most embodiments, it is not necessary to monitor and/or to control daily temperatures.

The fact that step a), because facultative anaerobic conditions are applied, can be performed at a moderate temperature favorizes the growth of desirable mesophilic bacteria and is detrimental to the growth of undesirable thermophilic bacteria.

Further, step a) can be performed in facultative anaerobic conditions and in acidic conditions, which conditions allow the growth of fungi and yeasts, which would be killed or would not develop in basic pH conditions or in strict anaerobic conditions.

Because there is no high temperature increase in fermenting and thus no loss of water, or only a reduced loss of water, due to evaporation, no further addition of water is generally required when performing step a).

In some embodiments, the duration of step a) can range from about 15 days to about 45 days, depending on the kind of organic waste material provided at step a), the degree of completion of incubation at step a), the kinds of miccroorganisms added at step b) and the temperature of the processed waste material at step a).

Depending on the kind of organic waste material provided at the beginning of step a) as well as, notably, of the amount thereof, facultative anaerobic conditions of step a) can be implemented through methods well known in the art.

In some embodiments, step a) can be performed in an anaerobic digester apparatus of a known model, appropriately sized. A digester apparatus can also be termed a fermenting device herein.

It shall be understood that when step a) is performed in an anaerobic digester apparatus, facultative anerobic conditions of step a) are obtained by allowing contact of the inner compartment of the digester, and thus of the fermenting organic waste, with the atmospheric environment.

Further, avoiding strict anaerobic conditions can be reached by avoiding oxygen deprivation of the inner volume of the fermenting organic waste, for example by limiting the height of the organic waste material in the digester, such as limiting the height of the organic waste material to less than about 80 centimeters height.

At the end of step a), the resulting fermented organic product mainly includes a moisture-containing solid fraction.

At the end of step a), the resulting fermented organic product can be stored until further processing. It can be stored in the digester used at step a), or alternatively it can be stored in another container.

Noticeably, the initial colors of each of the combined waste materials used for preparing the starting organic waste material have not substantially changed. Without wishing to be bound by any particular theory, it is believed that the depletion of oxygen associated with the lactic acid which is produced during step a) has at least partly preserved the said organic waste material, which has thus undergone only partial degradation. For instance, it is believed that the sugar material contained in the starting organic waste material is degraded into the lactic acid and/or acetic acid which is/are produced.

### Step b) of the method

Processing of the fermented organic material obtained at step a) can be continued by subjecting the said material to a further step b), in aerobic conditions. Step b) can also be termed the "maturation phase" of the disclosed method.

At the end of step a), the resulting fermented organic material generally includes only solids, possibly with a high moisture content, since the liquid that may be generated during the fermentation step a) is regularly or continuously removed so as to preserve the facultative anaerobic conditions and thus avoid strict anaerobic conditions.

In contrast to step a) wherein one or more microorganisms are specifically added to the starting organic waste material to be processed, no further microorganism is specifically added at step b) of the method.

The facultative anaerobic conditions applied in step a) can allow preservation of microorganisms that grow in aerobic conditions, which include aerobic bacteria, fungi and yeasts. These microorganisms are in suitable conditions for their growth, at step b) of the disclosed method.

Preferably, at step b), the fermented organic material obtained at step a) can be brought into contact with the atmospheric air, so as to implement aerobic conditions of further transformation.

Because atmospheric air transports various microorganisms, including aerobic microorganisms, the fermented organic material placed in aerobic conditions is colonized with time with airborne microorganisms that will also contribute to the transformation and degradation of the fermented organic waste material, more precisely will contribute to transform and degrade the fermented organic material obtained at step a) of the method.

Consequently, aerobic microflora, including bacteria spontaneously develops at step b) in the fermented organic material obtained at step a).

Because step b) is performed in aerobic conditions, the whole mass of fermented organic material shall be as most as possible in contact with oxygen, e.g. with the atmospheric air.

At step b), attention shall be paid to avoid an excessive increase of the temperature of the processed fermented organic product, as well as to avoid generation of undesired gas release, and especially methane release.

Depending on the mass amount of fermented organic product to be treated and of the size and shape of the reactor, the processed fermented organic product can be gently stirred at step b), so as to ensure that step b) is performed in aerobic conditions.

In some embodiments, performing step b) in aerobic conditions can include adding plant material to the processed fermented organic material so as to reduce its density end ensure atmospheric air circulation within the fermenting mass. Illustratively, at step b), fiber-containing material, especially lignin-containing material, such as without limitation fragmented branch wood, saw dust, fodder or animal litter, can be added to the fermented organic material obtained at step a) so as to reduce the density of the waste material processed at step b) and also to favorize the growth of fungi and yeasts.

Preferably, the water content (i.e. the moisture content) of the waste material that is processed at step b) of the disclosed method generally can range from about 45% to about 75%.

In embodiments wherein the organic waste provided for performing the disclosed method is of a high energy density, such as is an organic waste having a high content in one or more of carbohydrates, fat and protein, material of low energy density can also be added to the fermented organic product at the beginning of step b).

Preferably, the pH of the waste material that is processed at step b) of the disclosed method can range from about 4 to about 6.

At step b) the temperature of the waste material can preferably range from about 25°C to about 50°C, and most preferably from about 25°C to about 45°C.

Generally, a temperature increase is observed at step b), which is due to exothermic transformation reactions occurring in the fermented organic waste material that is processed. In most embodiments, the temperature of the fermented organic waste material processed at step b) increases up to 15°C above the temperature of the surrounding environment, e.g. increases up to 15°C above the ambient temperature or increases up to 20°C above the ambient temperature.

The duration of step b) can range from about 2 weeks to about 6 weeks and can be generally of about 30 days.

In some embodiments, completion of step b) can be determined when, after the temperature increase described above, the temperature of the processed fermented organic waste material decreases until reaching up to 2°C above the temperature of the surrounding environment, e.g. decreases until up to 2°C above the ambient temperature.

In some embodiments, completion of step b) can also be determined as regards the color of the maturation organic material which is obtained, the said maturation organic material being of a brownish color.

In some embodiments, completion of step b) can also be determined when growth of yeasts and fungi is achieved, e.g. when odors which are characteristic of the presence of fungi are perceived by the operator.

At the end of step b) of aerobic fermentation, a maturation organic product is obtained.

### Step c) of the method

At step c) of the disclosed method, the maturation organic material which is obtained at the end of step b) can be subjected to a step of vermicomposting, so as to obtain a processed organic compost.

Vermicomposting *per se* is a method of waste transformation which is known in the art. General teachings concerning vermicomposting as a technology for converting waste into organic fertilizers may be found for example in Guttierrez-Miceli et al. (2011, Journal of Plant Nutrition, Vol. 34 : 1642-1653)) and in Yadav et al. (2011, Waste Management, Vol. 30 : 50-56 - the content being incorporated herein by reference).

The vermicomposting resulting product is known as a finely-divided mature peat-like material which is produced by a non-thermophilic process involving interactions between earthworms and microorganism (Edwards et al., 1988, In Neuhauser, C.A. (Ed.), Earthworms in Environmental and Waste Management, SPB Academic Publishing, The Hague, The Netherlands. 211-220) leading to bioxidation and stabilization of organic material (Aira et al., 2000, Eur J Soil Biol, Vol. 38 : 7-10_ the content being incorporated herein by reference)

"Vermicomposting" is understood herein to be the breakdown of organic matter by the ingestion and digestion of the matter by worms. Vermicomposting also includes the collateral biotransformation of organic matter from the microbiological action, such as bacterial action inherent in such systems. Thus, vermicomposting is the process by which worms convert a feedstock to produce vermicastings, (the excrement from earthworms) and vermicompost (material altered by contact with the worms, without being excrement).

As it is known in the art, vermicomposting increases the conversion of ammonium (*i.e.* in ammonia or ammoniac forms) to nitrate.

Step c) of vermicomposting the maturation organic product obtained at the end of step b) is rendered feasible notably because the said maturation organic product has a low content in ammonia.

It has been observed that, according to the present disclosure, worms can immediately colonize the maturation organic material obtained at step b) of the disclosed method. This is in contrast to what is generally observed with known methods of waste treatment, especially in contrast to what is observed when vermicomposting matter that has been previously subjected to a fermentation step in anaerobic conditions, where worm colonization is not immediate but rather starts after a latency time period which is necessary for the fermented material to be treated to eliminate substances which are toxic for worms such as, e.g., ammoniac.

In some embodiments, step c) can include adding an earthworm-containing substrate to the maturation organic product obtained at step b) and starting vermicomposting in the appropriate earthworm growth conditions.

In some embodiments, step c) of vermicomposting can include adding earthworms of one or more earthworm species to the maturation organic material obtained at step b).

There are numerous species of worms and particularly earthworms which are commonly known as "red" worms capable of performing vermicomposting. One non limitative example is *Lumbricus rubellus,* another non limitative example is *Eisenia fetida* (changed to *fetida* from *foetida* as of 2004). Other worm species that can be used at step e) are *Eisenia andrei, Perionyx excavatus* and *Eudrilus eugeniae* (Dominguez et al., 2010, In C.A. Edwards, N.Q. Arancon, and R.L. Sherman (Eds), Vermiculture technology: Earthworms, organic waste and environmental, Boca Raton, FL:CRC Press, pp. 11-25 _ the content being incorporated herein by reference). The red worms used in the present system can be *Esenia fetida.* However, the system is not limited to the particular species of red worm, as other types will work, depending in part upon the type of organic matter and the available sustainable environment. That is, other species of earthworm can be used in addition or instead of "red" worms such as *Eisenia fetida.* As the term is used in the present description, "worm" is intended to include all types and specie of earthworm that can be utilized in the vermicomposting of organic materials

Advantageously, earthworms of the "*Eisenia andrei*" type, also called "California worms", which are fond of organic matter, can be used and which are therefore well adapted for this function. Naturally, the earthworms release from their digestive tract an odorless dark brown liquid drop, called percolate, which is very rich in mineral and organic elements, but also very rich in anaerobic bacteria. The percolate is therefore an excellent "fertilizer" that can be used as a liquid fertilizer.

Although nematode inoculums are commercially available, these products may be packaged in wet sponges, designed to be rinsed in water, and directly applied with water to the product requiring treatment, here the maturation organic product obtained at step c ) of the disclosed method.

In embodiments wherein the earthworm-containing substrate consists of a wet sponge containing earthworms, these sponge deliverable species can also be released into compost and vermicompost tea brewing tanks by soaking and squeezing the sponges into the brew's water or tea. Due to the 24 or less hours of brewing time for conventional vermicompost teas, these teas do not propagate the added nematode populations, they just serve as a carrier for the added nematodes.

In some embodiments, at the beginning of step c) of the disclosed method, earthworms can be added to the maturation organic material obtained at step b) in an amount of at least about 10 earthworms per kilogram of maturation organic product to be treated.

In some embodiments, at the end of step c), a desired volume of the processed organic waste material that has been colonized by earthworms can be collected for being subsequently used as an earthworm-containing substrate for reiterating step d) with a maturation organic material obtained at step b) of another cycle of performing the method disclosed herein.

The worm population can be maintained indefinitely by reproduction and natural selection. Absent special circumstances, there is no need to add or remove members of the worm population beyond the initial formation of the bed. As such, the present disclosure is also an apparatus and process for worm production by exposing the worms to the conditioned feedstock. However, in order to maintain suitable environmental conditions for the earthworms, the biomass must be kept moist and parameters such as salinity, pH and nitrogen may, in some embodiments, be monitored.

Preferably, when required, step c) can further include adding cellulosic waste and/or water to the maturation organic material obtained at step b).

Moisture content of the worm bed can be regulated in a fermentation reactor equipped with a sprinkler system. The amount of applied water is regulated to avoid a saturation that may cause the worms to rise and be exposed on the surface, yet provides sufficient moisture to maintain the moisture gradient across the height of the worm bed. The temperature of the water to be applied can also be monitored so that too much heat is not removed from or applied to the worm bed. That is, if the water is too cold, even though the amount of water is appropriate for moisture content, too much heat may be removed and the worms may migrate downwards away from the most recently applied feedstock.

The sprinkler system can be adjusted to produce a fine mist above the digester bed, so that evaporative cooling can dominate and a corresponding temperature reduction is achieved, without materially increasing the moisture content of the digester bed and hence worm bed. That is, a substantial portion of the expressed water evaporates prior to descending to the surface of the worm bed and thereby locally cools the region, thus cooling the worm bed.

At step c) of the disclosed method, the temperature of the waste organic material being treated can be of at least about 15°C, preferably at least about 20°C. At step c) of the disclosed method, the temperature of the waste organic material being treated can be of at most about 40°C, and most preferably at most about 30°C.

At step c) of the disclosed method, the moisture content of the waste organic material being treated can be of at least about 50 %, such as of at least about 60% The moisture content of the waste organic material being treated can be of at most about 75%. The moisture content of the waste organic material being treated and can range from about 65% to about 80%.

At step c) of the disclosed method, the pH value of the waste organic material being treated can range from about 5 to about 7.

Typically, the vermicomposting process can include two different phases in relation to earthworm activity, (i) an active phase during which earthworms process the organic product to be treated and (ii) a maturation phase, which is marked by the displacement of the earthworms toward fresher layers of undigested organic substrate, when microorganisms decompose the earthworm-processed substrate. Thus, the worms effectively migrate upwards through the worm bed, always seeking a higher portion of the worm bed, having a higher food concentration (and away from the bottom illumination). As the amount and temperature of water applied to the exposed top of the worm bed is regulated, the worms continually migrate upwards in the worm bed. That is, the rate of water application and the water temperature can be selected to preclude driving the worms away from the surface of the worm bed in the digester bed.

The applied maturation organic material obtained at step b) can be processed through the worm bed in the digester bed over a period ranging from about 12 weeks to about 18 weeks.

In some embodiments, as part of normal processing, a scraper bar can be periodically passed along the top of the screens in the bottom of the digester bed. The bridging nature of the vermicastings and vermicompost that hold the material in place in the digester bed is disturbed and the material falls through the screen until new bridging action holds the overlying bedding in place. Material that has fallen to the drop zone is transferred to the screener, packaged and sold.

The processed organic waste obtained at the end of the vermicomposting step c) has a reduced content in pathogenic organisms, and can even be devoid of pathogenic organisms. The effectiveness of vermicomposting to reduce the presence of human pathogen is known in the art *(See* Eastman et al., 2001, Compost Science & Utilization, Vol. 9: 38-49 _ the content being incorporated herein by reference).

Step c) can be performed in any kind of vermicomposting device known in the art. The skilled artisan can for example refer to the devices disclosed by Tauseef et al. (2021, Biomass Conversion and Biorefinery _ the content being incorporated herein by reference),

The vermicomposting device (which may also be termed "worm bin") used at step c) of the method disclosed herein shall be substantially open to the atmospheric air. The vermicomposting device can be preferably open at its top, does not have solid bottoms, and, in some embodiments, can have additional air vents on the sides thereof. In embodiments of a vermicomposting device that is suitable for performing step c) of the disclosed method, the bottoms of the said vermicomposting device can include augers, which can be turned for harvesting worm castings and other constituents.

At the end of step c) of the disclosed method, an organic compost is obtained.

The present disclosure also relates to an organic waste compost obtainable by the method disclosed herein.

### Uses

It is believed that the processed organic compost material obtained at the end of step c) of the disclosed method shall increase the availability of soil phosphorous.

Further, the known presence of humic substances in vermicompost makes the resulting processed organic compost obtained at step c) of the disclosed method both agronomically efficient and ecofriendly (Senesi et al., 2007, Soil Biol Biochem, Vol. 39: 1244-1262).

Still further, a number of bacteria of different species have been reported in vermicomposts produced by different species of earthworm.

Yet further, vermicomposts are known to enhance a plurality of parameters of plants, including, on seedlings (Joshi et al., 2014, Rev Environ Sci Biotechnol, DOI 10.1007/s11157-014-9347-1, especially Table 3).

The present disclosure also pertains to the use of an organic compost obtainable by the method disclosed herein for soil fertilization.

The present disclosure relates to the use of the processed organic compost obtained by the method disclosed herein, or of the organic compost disclosed herein, for soil fertilization.

The present disclosure also concerns a method for soil fertilization comprising the steps of:
a) processing an organic waste material by the method disclosed herein, whereby an organic compost is obtained, and
b) adding the organic compost obtained at step a) to a soil to be fertilized.

The above description of the disclosed embodiments is provided to enable any person skilled in the art to make or use the invention. Various modifications to these embodiments will be readily apparent to those skilled in the art, and the generic principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art.

### EXAMPLES

### A-Step a: facultative anaerobic fermentation

Several kinds of wastes are collected: sealed dry kibbles, slightly used cat litter (98% of saw dust of spruce branches), plastic-free and metal-free carboard.

400 liters of specific microorganisms' solution are produced from 2x10 liters of stock solution (EM-1^{®} from Agriton) incubated with 2x10 liters of sugar cane molasses diluted in 2x180 liters of water, during 1 week at 30°C.

The global profile of waste used in "step a" in this experiment is shown in Table 2.

**Table 2: Global profile of the organic waste materials**

| Organic waste materials | Weight, kg | Profile |
|---|---|---|
| Declassified kibbles for dogs and cats | 394 | 30.9% |
| Used Cat litter | 185 | 14.5% |
| Cardboard | 136 | 10.7% |
| Used coffee ground | 112 | 8.8% |
| Probiotics | | |
| Seeded water (85% of microorganisms' solution) | 449 | 35.1% |
| Total | 1276 | 100% |

The wastes are seeded seprarately with an appropriate incorporation rate of seeded water, Table 4.

**Table 4: Rate of seeded water for organic wastes**

| Organic waste materials | Seeded water incorporation rate (Kg seeded water /Kg waste) |
|---|---|
| Declassified kibbles for dogs and cats | 35% |
| Used Cat litter | 66% |
| Cardboard | 100% |
| Used coffee ground | 25%-50%^{∗} |

| | |
|---|---|
| *according to moisture content | |

The excess of liquid is re-introduced until a full impregnation of the wastes is observed.

Then, complementary organic matters are associated in pairs according to a rough estimation of the bioavailability of their Carbone, Nitrogen and Energy contents. The availability linked to waste production quantity at the site is also considered. In this way, a mix of dog/cat kibbles and used cat litter is done through alternate superposition of multiple slides (thickness 10 cm) of each, in specific containers of 600 liters. And the same is done using cardboard and used coffee grounds.

Specifically, for the mix kibbles and used cat litter, several incorporation rates are considered from around 20% to 40%.

The fermentation occurs during the 4 following weeks.

The mean weight loss of the brute matter during this step is about 6% in the present experiment.

### B-Step b: Maturation, aerobic fermentation

Firstly, water is added in from 20% to 40% in weight of the fermented materials from "step a" according to moisture content. Then, the fermented material is stirred 3 times a week during 2 to 6 weeks according to the fermented matter composition.

During the first 3 weeks, and specifically for the mix kibbles/cat litter, temperature increases proportionally to kibbles incorporation rate. Fermented material could punctually reach a temperature 20 °C upper the ambient temperature (<45°C at the surface in the experiment). With the increase of temperature, CO₂ release increases and material smell also reveals ammonia and fatty acid release.

The own weight of the fermented materials reinforces the reaction. At this stage the dimension and shape of the pile is important. Increasing exchange surface with air by building swath in the containers with a height less than 80 cm is an appropriate adjustment for heat control when required.

The brute weight loss of materials during these first 3 weeks is from 15% to 34% according to kibbles incorporation rate and heat management.

The 4^{th} week temperature might be still upper ambient temperature according to kibble incorporation rate. Light colored organic matter is turning dark brown in this oxidation phase.

To be palatable for worms, unpleasant smell such as ammonia must disappear. Adding wet fibers in the maturating matter solves this point.

Indeed, an addition of fibers (cardboard) impregnated with water, from the 4^{th} to the 6^{th} week, at the incorporation rate of 10 to 20% of the fermented material in weight, permit to visibly promote fungi development and suppress within a week discomfort gas for worms. A better sequestration of elements of organic matter is subsequently suspected.

This fiber addition also permits to adjust density to an optimal range from about 0.5 to 0.75.

For the specific fermentation materials including cardboard and used coffee ground, the maturation phase lasts only a couple of weeks, without any unpleasant smell detected.

An appropriate management of this step permits to observe the worms interested by the maturated food in a short time.

At the scale of this experiment, 1190 kg of fermented materials "step b" is maturated adding 476kg of water and 36kg of cardboard.

The mean weight loss of the brute matter during this step, measured globally, is 27% in the present experiment.

### C-Step c: vermicomposting

Eight containers of 600 liters are specifically designed for vermicomposting. The main characteristics are: a tap to collect worm tea, a duckboard (10 cm height) at the bottom for oxygenation, and an appropriate surface of holes in the lid to optimize air flow, while keeping condensation and avoiding worms to get out.

Five kg of *Eisenia Andrei* worms are added in each container, 40 kg in total.

For each food (maturated materials) distribution, the amount is homogeneously split in each container.

Water is pulverized, cardboard and used coffee ground are directly and equally added in each vermicomposting container according to worms' behavior.

Table 5 shows the profile of inputs in vermicomposting containers.

**Table 5: Profile of inputs in vermicomposting containers**

| Food inputs in vermicomposting containers | Weight, kg | Profile |
|---|---|---|
| Matured fermented material from step b | 1235.5 | 64.8% |
| Pulverized water | 422.5 | 22.1% |
| Cardboard | 163.5 | 8.6% |
| Used coffee ground | 86 | 4.5% |
| Total | 1907.5 | 100% |

The global inputs weight in the 8 vermicomposting containers is 1907.5 kg.

To calculate weight loss of the brute matter for this step, 3 outputs of "step c" are considered (Table 6).

**Table 6: Global outputs of vermicomposting containers**

| Global outputs of vermicomposting containers | Weight, kg |
|---|---|
| 1-Vermi compost sifted to 6mm | 1379.2 |
| 2-Worm tea | 16 |
| 3-Weight gain of worms' mass | 40 |
| Total production in vermicomposting containers | 1435.2 |

After analysis by a certified laboratory, the vermicompost is conform NF 44-051.

The mean weight loss of the brute matter during this step is 15% in the present experiment.

The step c is stopped when all given foods seem eaten, after 6-7 months of vermicomposting in the present experiment. The optimal duration time was about 4 months for a 1ton target of vermicompost.

## Claims

1. A method for processing an organic waste material into an organic compost comprising:
a) fermenting the organic waste material comprising adding at least one or more lactic bacteria to the organic waste material wherein the step is performed under facultative anaerobic conditions and at an acidic pH, whereby a fermented organic material is obtained,
b) maturing the fermented organic material obtained at step a) in aerobic conditions, whereby a maturation organic material is obtained, and
c) vermicomposting the maturation organic material obtained at step b), whereby an organic compost is obtained.

2. The method according to claim 1, wherein step a) comprises adding a microorganism composition comprising lactic bacteria to the organic waste material.

3. The method according to claim 2, wherein the microorganism composition comprises, further to the lactic bacteria, one or more microorganisms selected from *Lactobacillus, Propionibacterium, Pediococcus, Streptococcus* or a combination thereof.

4. The method according to any one of claims 1 to 3, wherein step a) is performed at a pH from about 3 to about 5.

5. The method according to any one of claims 1 to 4, wherein the moisture content of the fermented organic material that is processed at step b) is from about 45% to about 75%.

6. The method according to any one of claims 1 to 5, wherein step b) is performed at a pH from about 4 to about 7.

7. The method according to any one of claims 1 to 6, wherein step c) comprises adding earthworms of one or more earthworm species to the maturation organic material obtained at step b).

8. The method according to any one of claims 1 to 7, wherein step c) further comprises adding, in addition to earthworms, cellulosic waste and/or water to the maturation organic material.

9. The method according to any one of claims 1 to 8, wherein step c) is performed at a T°C from about 15°C to about 30°C.

10. The method according to any one of claims 1 to 9, wherein step c) is performed at a moisture content of the processed organic material from about 60% to about 70%.

11. A processed organic compost obtainable by the method according to any one of claims 1 to 10.

12. The use of the processed organic compost obtained by the method according to any one of claims 1 to 10, or of the organic compost according to claim 11, for soil fertilization.

13. A method for soil fertilization, comprising:
i) processing an organic waste material according to the method of any one of claims 1 to 10 whereby an organic compost is obtained; and
ii) adding said organic compost obtained at step i) to the soil to be fertilized.
